# EUROPEAN PATENT APPLICATION

(11) **EP 3 560 892 A1**
(43) Date of publication of application: **30.10.2019**
(21) Application number: 19171177.9
(22) Date of filing: 25.04.2019
(51) Int. Cl.: C01F 5/00, C01F 11/00, C09K 5/16, F28D 20/00

(54) **HEAT STORAGE MATERIAL, METHOD FOR PRODUCTION OF HEAT STORAGE MATERIAL, AND CHEMICAL HEAT PUMP**

(30) Priority: 27.04.2018 JP 2018087556
(71) Applicant: TOYOTA JIDOSHA KABUSHIKI KAISHA, Toyota-shi, Aichi-ken 471 8571 (JP)
(72) Inventor: TSUCHIYA, Kimihiro, Aichi-ken, 471-8571 (JP); OHASHI, Yoshio, Aichi-ken, 471-8571 (JP)
(74) Representative: J A Kemp LLP

(57) **Abstract**

[OBJECT]

To provide a heat storage material having a high hydration capacity, which does not readily deliquesce, and the hydration capacity of which can be effectively used. Furthermore, the present disclosure aims to provide a method for the production of such a heat storage material, and a chemical heat pump and heat storage method using such a heat storage material.

[SOLVING MEANS]

The heat storage material of the present disclosure is a composite metal halide including a monovalent metal, a divalent metal, and a halogen. Furthermore, the method for the production of the heat storage material of the present disclosure includes preparing a mixture in which a monovalent metal halide and a divalent metal halide hydrate are mixed, and generating the composite metal halide by subjecting the mixture to a heat treatment. Furthermore, the chemical heat pump of the present disclosure includes a water storage unit 10 for storing water as a working medium, a heat storage material retention unit 20 for retaining the heat storage material of the present disclosure, and a water vapor flow path 30 for allowing water to flow vapor between the water storage unit and the heat storage material retention unit.

## Description

### BACKGROUND

The present disclosure relates to a heat storage material, a method for the production of a heat storage material, and a chemical heat pump.

### FIELD

Various heat storage systems i.e., chemical heat pumps, using a heat storage material which generates reaction heat, adsorption heat, and/or hydration heat by contact with a working medium (heating medium) such as water or ammonium, have been developed.

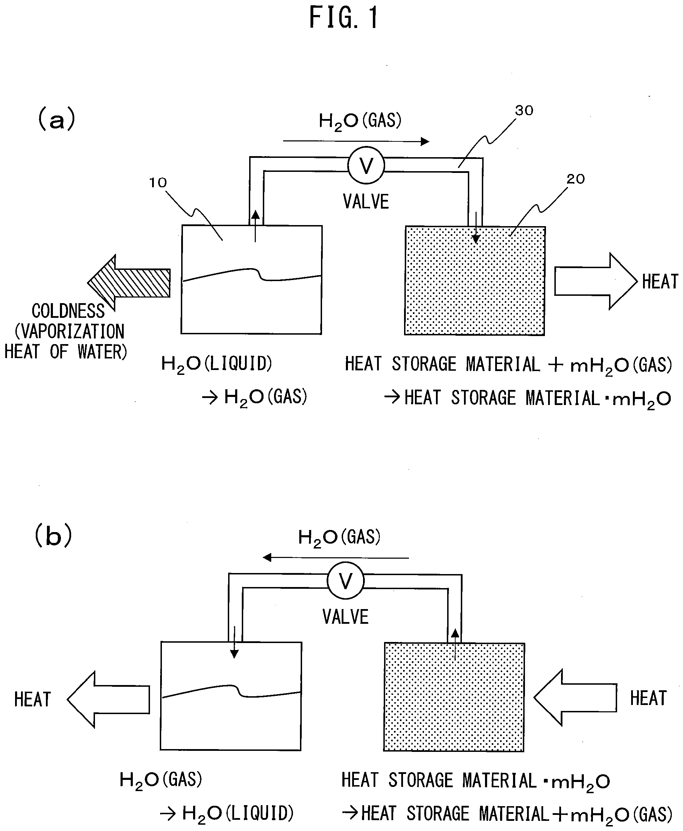

In a chemical heat pump using water as a working medium, when, for example, the connection valve between a water storage unit 10 and a heat storage material retention unit 20 is opened, as shown on the left side of FIG. 1(a), the water in the water storage unit is vaporized to generate water vapor (H₂O (gas)), due to the vapor pressure difference between the water storage unit 10 and the heat storage material retention unit 20. This stage can also be referred to as a stage in which coldness is supplied from the water storage unit to the outside by vaporizing the water in the water storage to generate water vapor. In this case, in such a chemical heat pump, the water vapor generated in the water storage unit 10 is supplied to the heat storage material retention unit 20 through a water vapor flow path 30, which then reacts with the heat storage material to supply reaction heat, adsorption heat, and/or hydration heat to the outside, as shown on the right side of FIG. 1(a). In other words, in such a heat pump, heat can move from the water storage unit 10 side to the heat storage material retention unit 20 side.

Furthermore, in this chemical heat pump, in a regeneration stage which enables the reaction shown in FIG. 1(a) to occur again, heat is supplied from the outside to the heat storage material retention unit 20 to desorb the water from the heat storage material to generate water vapor, as shown on the right side in FIG. 1(b). This stage can be referred to as a stage in which coldness is supplied to the outside from the heat storage material retention unit 20 by desorbing the water from the heat storage material in the heat storage material retention unit 20. In this case, in such a chemical heat pump, the water vapor generated in the heat storage material retention unit 20 is supplied to the water storage unit 10, is then condensed, and the latent heat of the condensation is supplied to the outside.

In a representative example of a chemical heat pump in which water is used as the working medium, alkaline earth metal compounds such as calcium chloride are used as the heat storage material. In this case, specifically, the water storage unit absorbs heat (i.e., generates coldness) and heat can be generated in the heat storage material retention unit by reactions (a-1) and (a-2) described below. Further, water can be desorbed from the heat storage material, the heat storage material can be regenerated, and the desorbed water can be condensed in the water storage unit by supplying heat to the heat storage material retention unit by reaction (b-1) and (b-2) described below:

(a-1) H₂O (liquid) → H₂O (gas) ... (absorbs heat)

(a-2) CaCl₂ · H₂O + H₂O → CaCl₂ · 2H₂O ... (generates heat)

(b-1) CaCl₂ · 2H₂O → CaCl₂ · H₂O + H₂O ... (absorbs heat)

(b-2) H₂O (gas) → H₂O (liquid) ... (generates heat)

In recent years, efforts to further improve the heat storage and dissipation performance of chemical heat storage systems using water or ammonium as the working medium have been made.

Specifically, Patent Literature 1 describes a chemical heat storage system, comprising a heat storage unit for housing a heat storage material composed mainly of a liquid phase inorganic salt hydrate, a water storage unit for storing water, a water vapor supply part for volatilizing the water stored in the water storage unit and supplying the volatilized water to the heat storage material as water vapor, and a heat exchanger for discharging the heat generated by the heat storage material in the heat storage unit to the outside, wherein heat is stored in the heat storage material by volatilizing the water from the heat storage material, heat is dissipated by the reaction of the heat storage material in the heat storage state and the water vapor volatilized from the water storage unit, the heat storage material contains a surfactant, and the heat storage material in the heat storage state is in a liquid state having fluidity.

Patent Literature 2 describes a method for the production of a composite metal halide, comprising a supply step in which ammonia is supplied to a container containing a mixed powder composed of a plurality of metal halide raw materials different in at least one of the metal element and the halogen element or a molded body formed from the mixed powder, wherein at least either of the plurality of metal elements or the plurality of halogen elements included in the mixed powder are composited to generate the composite metal halide.

Patent Literature 3 describes a chemical heat storage material comprising a diamine complex (MX₂ · 2NH₃) of a metal halide (MX₂) comprising one or more metal elements (M) selected from Mg, Mn, Fe, Co, and Ni, and one or more halogen elements (X) selected from Br and I, wherein the diamine complex of the metal halide is a specific structure metal halide diamine complex having a crystal structure belonging to the space group Cmmm.

Patent Literature 4 describes a chemical heat storage material for generating heat or storing heat as a result of the occlusion or release of a working medium, wherein the chemical heat storage material includes a composite metal salt (MXn, where n = the average valency of M), which is a metal halide comprising a metal element (M) and a halogen element (X), at least one of which comprises two or more elements, and the composite metal salt has an average electronegativity difference (ΔEa = EXa - EMa) of from 0.3 to 2.16 or from 2.21 to 3.2 obtained by subtracting the average electronegativity of the metal element (EMa) from the average electronegativity of the halogen element (EXa).

Patent Literature 5 describes a divalent europium activated composite halide phosphor represented by the composition formula (I):

M^{II}X₂ · aM^{II}X'₂ · bCsX" · cSnX"'₂ · xEu²⁺ ... (I)

where M^{II} is at least one alkaline earth metal selected form the group consisting of Ba, Sr, and Ca; X and X' are each at least one halogen selected from the group consisting of Cl, Br, and I, and X ≠ X'; X" and X"' are each at least one halogen selected from the group consisting of F, Cl, Br, and I; and a is a numerical value in the range of 0.1 ≤ a ≤ 10.0, b is a numerical value in the range 0 < b ≤ 10.0, c is a numerical value in the range 10⁻⁶ ≤ c ≤ 2 x 10⁻², and x is a numerical value in the range 0 < x ≤ 0.2.

### [CITATION LIST]

### [PATENT LITERATURE]

[PTL1] Japanese Unexamined Patent Publication (Kokai) No. 2016-053438
[PTL2] Japanese Unexamined Patent Publication (Kokai) No. 2015-174783
[PTL3] Japanese Unexamined Patent Publication (Kokai) No. 2016-098234
[PTL4] Japanese Unexamined Patent Publication (Kokai) No. 2014-159497
[PTL5] Japanese Unexamined Patent Publication (Kokai) No. S 61-235486

### SUMMARY

### [TECHNICAL PROBLEM]

The heat or coldness generation amount in a chemical heat storage system in which water is used as the working medium and the water reacts with the heat storage material to form a hydrate is determined, in theory, by the amount of water that can react with the heat storage material to form a hydrate, i.e., the saturated hydration capacity of the heat storage material.

However, in practice, in a heat storage material having deliquescent properties, such as alkaline earth metal compounds, since the surface area of the heat storage material decreases after deliquescence, reaction with water vapor cannot be performed efficiently, and thus, it is difficult to efficiently utilize heat storage materials having deliquescent properties.

Furthermore, for heat storage materials such as alkaline earth metal compounds, since the hydration reaction occurs in multiple stages, and the compounds take a metastable state during the progression of the hydration stage, whereby the reaction does not further proceed, it is difficult to efficiently utilize such heat storage materials.

Thus, the present disclosure aims to provide a heat storage material having a high hydration capacity, which does not readily deliquesce, and the hydration capacity of which can be effectively used. Furthermore, the present disclosure aims to provide a method for the production of such a heat storage material, and a chemical heat pump and heat storage method using such a heat storage material.

### [SOLUTION TO PROBLEM]

Examples of the aspects of the present disclosure are as described below.

### <Aspect 1>

A heat storage material, being a composite metal halide including a monovalent metal, a divalent metal, and a halogen.

### <Aspect 2>

The heat storage material according to aspect 1, wherein the composite metal halide has a perovskite structure of the composition of either Formula (1) or (2) below:

ABX₃ (1)

A₂BX₄ (2)

wherein A is a monovalent metal, B is a divalent metal, X is a halogen, and A, B, and X may each be one or a combination of a plurality of elements having the same valency.

### <Aspect 3>

The heat storage material according to aspect 2, wherein the composite metal halide has the perovskite structure of the composition of Formula (1).

### <Aspect 4>

The heat storage material according to any one of aspects 1 to 3, wherein the monovalent metal is selected from the group consisting of alkali metals and transition metals.

### <Aspect 5>

The heat storage material according to aspect 4, wherein the monovalent metal is selected from the group consisting of potassium and cesium.

### <Aspect 6>

The heat storage material according to any one of aspects 1 to 5, wherein the divalent metal is selected from the group consisting of alkaline earth metals and transition metals.

### <Aspect 7>

The heat storage material according to aspect 6, wherein the divalent metal is selected from the group consisting of magnesium and calcium.

### <Aspect 8>

The heat storage material according to any one of aspects 1 to 7, wherein the halogen is selected from the group consisting of chlorine, bromine, and iodine.

### <Aspect 9>

The heat storage material according to aspect 8, wherein the halogen is chlorine.

### <Aspect 10>

A method for the production of the heat storage material according to any one of aspects 1 to 9, comprising the following steps:
preparing a mixture by mixing a monovalent metal halide and a divalent metal halide hydrate, and
generating the composite metal halide by subjecting the mixture to a heat treatment.

### <Aspect 11>

A chemical heat pump, comprising:
a water storage unit for storing water as a working medium,
a heat storage material retention unit for retaining the heat storage material according to any one of aspects 1 to 9, and
a water vapor flow path for allowing water vapor to flow between the water storage unit and the heat storage material retention unit.

### <Aspect 12>

A heat storage method, comprising performing, in the chemical heat pump according to aspect 11, heat storage and heat dissipation by hydrating and dehydrating the working medium in the heat storage material.

### [ADVANTAGEOUS EFFECTS OF INVENTION]

According to the present disclosure, a heat storage material having a high hydration capacity, which does not readily deliquesce, and the hydration capacity of which can be effectively used can be provided. Furthermore, according to the present disclosure, a method for the production of such a heat storage material, and a chemical heat pump and heat storage method using such a heat storage material can be provided.

### BRIEF DESCRIPTION OF DRAWINGS

FIG. 1 is a schematic view of a chemical heat pump according to the present disclosure and a convention chemical heat pump.
FIG. 2 is a view showing X-ray diffraction measurement results of the samples obtained in Examples 1 to 3 and Comparative Examples 1, 2, 4, and 5.

### DESCRIPTION OF EMBODIMENTS

The embodiments of the present disclosure will be described below. However, the present disclosure is not limited to the following embodiments.

### <Heat Storage Material>

The heat storage material of the present disclosure is a composite metal halide comprising a monovalent metal, a divalent metal, and a halogen. The "composite metal halide" of the present disclosure is a compound in which both the monovalent metal and the divalent metal are ionically bonded to the halogen to constitute a single salt, and thus, the "composite metal halide" can be distinguished from, for example, a mixture of a monovalent metal halide and a divalent metal halide. Note that the form of the heat storage material is not limited and may typically be a particulate or granule.

The inventors of the present disclosure have discovered that composite metal halides comprising both a monovalent metal and a divalent metal (hereinafter referred to simply as "the composite metal halide of the present disclosure") have low deliquescent properties and/or have advantageous properties, whereby the hydration capacity thereof can be effectively utilized, comparted to divalent metal halides such as alkaline earth metal compounds. Such low deliquescent properties are advantageous in view of the form of the heat storage material and the retention of reactivity.

Though not bound by theory, it is believed that the divalent metal is useful for hydration because it can easily coordinate with water, and conversely, the monovalent metal is less like to coordinate with water than the divalent metal. By primarily coordinating the halogen, the skeletal structure of the composite metal halide is maintained and deliquescence is prevented.

Thus, the relative humidity (RH) at which the composite metal halide of the present disclosure deliquesces at 20 °C is, for example, 35% or more, 40% or more, or 45% or more, and 80% or less, 70% or less, or 60% or less.

Note that divalent metal halide compounds such as alkaline earth metal compounds generally have a metastable intermediate hydration state between the anhydrous state and the saturated hydration state, and as a result, it may be difficult for the hydration to proceed beyond this stage. In the composite metal halide of the present disclosure, such a metastable intermediate state can be prevented. For example, the hydration reaction of the composite metal halide of the present disclosure can be a single stage.

### (Crystal Structure)

In preferred embodiments, the composite metal halide of the present disclosure has a perovskite structure of the composition of either Formula (1) or (2) described below, in particular, has a perovskite structure of the composition of Formula (1) described below:

ABX₃ (1)

A₂BX₄ (2)

wherein A is a monovalent metal, B is a divalent metal, X is a halogen, and A, B, and X may each be one or a combination of a plurality of elements having the same valency.

As the method for evaluating the presence or absence of a perovskite structure, known methods such as Rietveld analysis of X-ray diffraction measurement data have been considered. Furthermore, the presence or absence of a perovskite structure can also be confirmed by comparing the X-ray diffraction measurement data of a crystal sample with the X-ray diffraction profiles of known perovskite crystals.

In the perovskite structure, a stable crystal structure is formed due to a remarkable difference in ionic radius between the monovalent metal and the divalent metal, and as a result, it is believed that high hydration capacity and low deliquescent properties can be compatible with each other due to the presence of the monovalent metal having a large ionic radius, which is not easily hydrated, and the divalent metal having a small ionic radius, which is easily hydrated.

From the viewpoint of favorably forming a perovskite structure, the combination of the monovalent metal and the divalent metal is preferably selected so that the difference in ionic radius is large. Preferable examples thereof include KMgCl₃, K₂MgCl₄, and CsMgCl₃. Though it is known that MgCl₂, which is a divalent metal halide, exhibits remarkable deliquescent properties, since KMgCl₃, K₂MgCl₄, and CsMgCl₃ further include a monovalent metal, each can exhibit reduced deliquescent properties as compared to MgCl₂ while having a good hydration capacity.

### (Monovalent Metal)

Monovalent metals are typically selected from the group consisting of alkali metals and transition metals, in particular, alkali metals. In the present disclosure, "alkali metals" means a Group I element. From the viewpoint of the ease of production of the composite metal halide, the alkali metal is selected from the group consisting of lithium (Li), sodium (Na), potassium (K), rubidium (Rb), and cesium (Cs). Furthermore, examples of transition metals that can become monovalent metals include chromium (Cr) and copper (Cu).

The relatively large ionic radius of the monovalent metal icon is preferable from the viewpoint of easily forming a stable halide salt (e.g., a perovskite structure) in combination with the divalent metal, and from the viewpoint of the lack of ease of hydration thereof. From these viewpoints, the monovalent metal is preferably selected from the group consisting of potassium (K), rubidium (Rb), and cesium (Cs).

An alkali metal is more preferable as the monovalent metal from the viewpoint of the stability of the hydration behavior thereof as compared to transition metals, which have variable valences.

### (Divalent Metal)

Divalent metals are typically selected from the group consisting of alkaline earth metals and transition metals, in particular, alkaline earth metals. In the present disclosure, "alkaline earth metals" means Group II elements. From the viewpoint of the ease of production of the composite metal halide, the alkaline earth metal is typically selected from the group consisting of magnesium (Mg), calcium (Ca), strontium (Sr), and barium (Ba). Furthermore, examples of transition metals that can become divalent metals include zinc (Zn), copper (Cu), iron (Fe), lead (Pb), nickel (Ni), manganese (Mn), and tin (Sn).

The relatively small ionic radius of the divalent metal is preferable from the viewpoint of easily forming a stable halide salt (e.g., a perovskite crystal structure) in combination with the monovalent metal, and from the viewpoint of the ease of hydration thereof. From these viewpoints, the divalent metal is preferably selected from the group consisting of magnesium and calcium, more preferably magnesium.

Alkaline earth metals are more preferable as the divalent metal from the viewpoint of the stability of the hydration behavior thereof as compared to transition metals, which have variable valences.

### (Halogen)

In the present disclosure, "halogens" means Group 17 elements. From the viewpoint of the ease of the production of the composite metal halide, the halogen is preferably selected from the group consisting of chlorine (Cl), bromine (Br), and iodine (I), more preferably chlorine (Cl).

### <Heat Storage Material Production Method>

The method for production the heat storage material of the present disclosure includes the following steps:
preparing a mixture by mixing a monovalent metal halide and a divalent metal halide hydrate, and
generating the composite metal halide by subjecting the mixture to a heat treatment.

The use of a divalent metal halide hydrate as the supply source of the divalent metal rather than a divalent metal halide anhydride is advantageous for convenient production of the heat storage material of the present disclosure.

Specifically, when producing the composite metal halide of the present disclosure, if a divalent metal halide anhydride is used, after mixing the monovalent metal halide and the divalent metal halide anhydride, it is necessary to perform a heat treatment after performing a mechanical operation to compact the mixture, and it is necessary to repeat the compacting and heat treatment a plurality of times in order to increase the reaction yield. Thus, in the method of the present disclosure, since a divalent metal halide hydrate is used rather than a divalent metal halide anhydride, even if such a mechanical operation is not performed, the composite metal halide can be obtained at a high reaction yield.

The hydration number of the divalent metal halide hydrate used in the method of the present disclosure is preferably the maximum hydration number of the compound. For example, in the case of MgCl₂, MgCl₂ · 6H₂O, which is a hexahydrate, is preferably used. Thus, in order to produce, for example, KMgCl₃, which is a composite metal hydride, KCl can be used as the monovalent metal halide and MgCl₂ · 6H₂O can be used as the divalent metal halide hydrate.

The duration of the mixture of the monovalent metal halide and the divalent metal halide hydrate in the method of the present disclosure may be, for example, 1 minute or more, 5 minutes or more, or 10 minutes or more, and may be 1 hour or less, 30 minutes or less, or 20 minutes or less.

The heat treatment in the method of the present disclosure can be performed in an inert atmosphere, for example, under a nitrogen atmosphere. The temperature of the heat treatment is, for example, a temperature close to the melting point of the desired composite metal halide, and may be, for example, a temperature which is 60% or more, 70% or more, or 80% or more of the melting point (°C), and may be a temperature which is 100% or less, 95% or less, or 90% or less of the melting point (°C). For reference, the melting point of KMgCl₃ is about 487 °C, the melting point of K₂MgCl₄ is about 429 °C, and the melting point of CsMgCl₃ is about 610 °C. The duration of the heat treatment may be, for example 1 hour or more, 3 hours or more, 5 hours or more, or 10 hours or more, and may be 24 hours or less, 20 hours or less, or 15 hours or less.

### <Heat Storage Material Applications>

The chemical heat pump of the present disclosure comprises, as shown in FIG. 1(a), a water storage unit 10 for storing water as a working medium, a heat storage material retention unit 20 for retaining the heat storage material of the present disclosure, and a water vapor flow path 30 for allowing water vapor to flow between the water storage unit and the heat storage material retention unit.

During use of this chemical heat pump, heat storage and heat dissipation are performed in the chemical heat pump by hydrating and dehydrating the working medium in the heat storage material. Specifically, for example, during use of this chemical pump, water vapor generated by evaporating the water in the water storage unit is supplied to the heat storage material retention unit, the water vapor reacts with the heat storage material retained in the heat storage material retention unit, and the heat energy generated from this hydration is discharged. Thereafter, coldness is generated in the water storage unit due to vaporization heat. Conversely, during regeneration of the heat storage material, water vapor is generated from the heat storage material by adding heat to the heat storage material retention unit, and this water vapor is condensed in the water storage unit to produce water.

The chemical heat pump can be used air condition systems, dehumidifying systems, etc.

### EXAMPLES

The present disclosure will be further specifically described below by way of the Examples. However, the present disclosure is not limited to these Examples.

### <Sample Preparation>

### (Example 1)

Equimolar KCl and MgCl₂ · 6H₂O were mixed at room temperature for 20 minutes, and the mixture was then subjected to a heat treatment at 400 °C for 12 hours to obtain a KMgCl₃ powder as the sample of Example 1. Note that preparation of the samples of Example 1 and the Examples and Comparative Examples below was performed in a nitrogen atmosphere.

Note that, for reference, equimolar KCl and MgCl₂ were mixed at room temperature for 20 minutes and then compacted using a pressure of 10 MPa at room temperature. The obtained molded body was subjected to heat treatment at 400 °C for 12 hours. However, KMgCl₃ powder could not be obtained by this process. When mixing, compacting, and heat treatment were repeated once again under the same conditions, a KMgCl₃ powder the same as described above could be obtained (confirmed by X-ray diffraction profiling).

### (Example 2)

MgCl₂ and KCl at twice the molar number of the MgCl₂ were mixed at room temperature for 20 minutes and then compacted using a pressure of 10 MPa at room temperature. The obtained molded body was subjected to heat treatment at 400 °C for 12 hours. Mixing, compacting, and heat treatment were repeated once again under the same conditions to obtained a K₂MgCl₄ powder as the sample of Example 2.

### (Example 3)

Equimolar CsCl and MgCl₂ · 6H₂O were mixed at room temperature for 20 minutes and then subjected to heat treatment at 480 °C for 12 hours. Mixing and heat treatment were repeated once again to obtain a CsMgCl₃ powder as the sample of Example 3.

### (Comparative Example 1)

A commercially available MgCl₂ powder was used as the sample of Comparative Example 1.

### (Comparative Example 2)

A commercially available KCl powder was used as the sample of Comparative Example 2.

### (Comparative Example 3)

Equimolar MgCl₂ powder the same as that used in Comparative Example 1 and KCl powder the same as that used in Comparative Example 2 were mixed at room temperature for 20 minutes to obtain a composite powder as the sample of Comparative Example 3.

### (Comparative Example 4)

A commercially available CsCl powder was used as the sample of Comparative Example 4.

### (Comparative Example 5)

Equimolar MgCl₂ powder the same as that used in Comparative Example 1 and CsCl powder the same as that used in Comparative Example 4 were mixed at room temperature for 20 minutes to obtain a composite powder as the sample of Comparative Example 5.

### (Comparative Example 6)

A commercially available CaCl₂ powder was used as the sample of Comparative Example 6.

### <Evaluation>

### 1. Confirmation of Crystal Structure

The crystal structures of the samples obtained in the Examples and Comparative Examples described above were confirmed by X-ray diffraction measurement under the following conditions:
Measurement Device: RINT RAPID II (manufactured by Rigaku Corporation)
Measurement Conditions: Voltage 50 V, Current 100 mA, Collimator ϕ0.3, Sample Angle ω = 15°

In order to prevent the samples obtained in the Examples and Comparative Examples from reacting with moisture in the atmosphere, the sample surfaces were covered with adhesive tape for use as measurement samples.

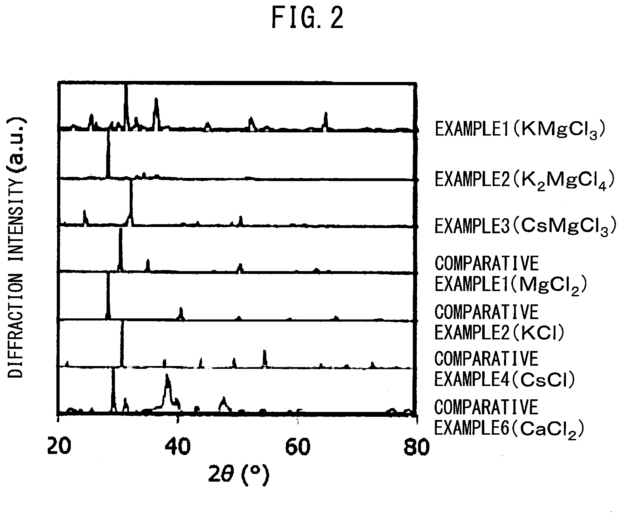

FIG. 2 shows the X-ray diffraction measurement results of the samples obtained in Examples 1 to 3 and Comparative Examples 1, 2, 4, and 6.

From the X-ray diffraction results shown in FIG. 2, it could be understood that the diffraction peak of Example 1 (KMgCl₃) was different from the simple summation of the diffraction peaks of Comparative Example 1 (MgCl₂) and Comparative Example 2 (KCl), i.e., the diffraction peak of Example 1 (KMgCl₃) was a composite metal halide peak rather than the peak of a mixture of an alkaline earth metal halide and an alkali metal halide.

### 2. Water Vapor Adsorption (Hydration) Isotherm Measurement

Water vapor adsorption isotherms were obtained for the samples before and after the following pretreatment:
Pretreating Device: BELSORP-vacII (manufactured by Microtrac-Bel Corporation)
Pretreatment Conditions: Degree of Vacuum: 10⁻² Pa or less, Heated at 150 °C for 6 hours
Measurement Device: BELSORP-max (manufactured by Microtrac-Bel Corporation)
Measurement Conditions: Temperature 20 °C, the water vapor adsorption amount was measured from a relative pressure of 0 to the relative pressure at deliquescence

### (1) Hydration Reaction Stage No.

In the isotherms described above, when the isotherm changed stepwise as the relative humidity increased, the number of stages was evaluated as the number of hydration reaction stages. The evaluation results are shown in Table 1 below.

### (2) Deliquescent Humidity

In the isotherms described above, when the water vapor adsorption amount increased abruptly at a certain relative humidity and the water vapor adsorption amount continued to increase at that relative humidity, it was assumed that the sample deliquesced at that relative humidity. The evaluation results are shown in Table 1 below.

### 3. Hydration Capacity (Thermogravimetric Analysis)

The samples of the Examples and Comparative Examples were hydrated to the stage prior to deliquescing to obtain hydrated samples. The hydrated samples were introduced to the measurement device described below, and the change in weight when the temperature was raised under the elevated temperature conditions described below was measured. The evaluation results are shown in Table 1 below.
Measurement Device: Pyris TGA (manufactured by Perkinelmer Corporation)
Heating Conditions: Temperature 30 to 500 °C, Heating Rate 2 °C/min

**[Table 1]**

| | Heat Storage Material | Water Vapor Adsorption Isotherm | | Thermogravimetric Analysis | |
|---|---|---|---|---|---|
| | | Hydration Reaction Stage No. | Deliquescence Humidity (%RH) | Hydration Capacity (g-water/g-sample) | |
| Example 1 | KMgCl₃ | 1 | 49 | Actual Measurement Value | 0.374 |
| Example 2 | K₂MgCl₄ | 1 | 49 | | 0.295 |
| Example 3 | CsMgCl₃ | 1 | 49 | | 0.29 |
| Comparative Example 1 | MgCl₂ | 4 | 32 | Theoretical Value⁽¹⁾ | 0.215 (at maximum hydration number) |
| Comparative Example 2 | KCl | 0 (Non-Hydratable) | 75 | | 0 (Non-Hydratable) |
| Comparative Example 3 | MgCl₂ + KCl | - | 31 | | - |
| Comparative Example 4 | CsCl | 0 (Non-Hydratable) | 59 | | 0 (Non-Hydratable) |
| Comparative Example 5 | MgCl₂ + CsCl | - | 30 | | - |
| Comparative Example 6 | CaCl₂ | 4 | 33 | | 0.197 (at maximum hydration number) |

As shown in Table 1, in the samples of the Examples, which correspond to the composite metal halide of the present disclosure, hydration capacity and deliquescent humidity were higher as compared to the samples of the Comparative Examples.

Specifically, in, for example, the magnesium chloride (MgCl₂) of Comparative Example 1, the hydration capacity was 0.215 g-water/g-sample and the deliquescent humidity was 32% RH. In the potassium chloride (KCl) of Comparative Example 2, the hydration capacity was 0 g-water/g-sample (non-hydratable) and the deliquescent humidity was 75% RH. Contrary thereto, in the samples of Examples 1, 2, and 3 (KMgCl₃, K₂MgCl₄, and CsMgCl₃), the hydration capacities were higher than those of the samples of the Comparative Examples and the deliquescent humidities were 49% RH. From these results, it could be understood that the composite metal halide of the present disclosure achieved both good hydration capacity and low deliquescent properties.

## Claims

1. A heat storage material, being a composite metal halide including a monovalent metal, a divalent metal, and a halogen.

2. The heat storage material according to claim 1, wherein the composite metal halide has a perovskite structure of the composition of either Formula (1) or (2) below:
ABX₃ (1)
A₂BX₄ (2)
wherein A is a monovalent metal, B is a divalent metal, X is a halogen, and A, B, and X may each be one or a combination of a plurality of elements having the same valency.

3. The heat storage material according to claim 2, wherein the composite metal halide has the perovskite structure of the composition of Formula (1).

4. The heat storage material according to any one of claims 1 to 3, wherein the monovalent metal is selected from the group consisting of alkali metals and transition metals.

5. The heat storage material according to claim 4, wherein the monovalent metal is selected from the group consisting of potassium and cesium.

6. The heat storage material according to any one of claims 1 to 5, wherein the divalent metal is selected from the group consisting of alkaline earth metals and transition metals.

7. The heat storage material according to claim 6, wherein the divalent metal is selected from the group consisting of magnesium and calcium.

8. The heat storage material according to any one of claims 1 to 7, wherein the halogen is selected from the group consisting of chlorine, bromine, and iodine.

9. The heat storage material according to claim 8, wherein the halogen is chlorine.

10. A method for the production of the heat storage material according to any one of claims 1 to 9, comprising the following steps:
preparing a mixture by mixing a monovalent metal halide and a divalent metal halide hydrate, and
generating the composite metal halide by subjecting the mixture to a heat treatment.

11. A chemical heat pump, comprising:
a water storage unit for storing water as a working medium,
a heat storage material retention unit for retaining the heat storage material according to any one of claims 1 to 9, and
a water vapor flow path for allowing water vapor to flow between the water storage unit and the heat storage material retention unit.

12. A heat storage method, comprising performing, in the chemical heat pump according to claim 11, heat storage and heat dissipation by hydrating and dehydrating the working medium in the heat storage material.
